# EUROPÄISCHE PATENTSCHRIFT

(11) **EP 1 268 107 B1**
(45) Veröffentlichungstag und Bekanntmachung des Hinweises auf die Patenterteilung: **15.11.2006**
(21) Anmeldenummer: 01915068.9
(22) Anmeldetag: 24.02.2001
(51) Int. Cl.: B23B 29/034

(54) **BOHRWEKZEUG**
DRILLING TOOL
OUTIL DE PERçAGE

(30) Priorität: 04.04.2000 DE 10016684
(43) Veröffentlichungstag der Anmeldung: 02.01.2003
(73) Patentinhaber: Widia GmbH, 45145 Essen (DE)
(72) Erfinder: HEINLOTH, Markus, 92353 Postbauer-Heng (DE)
(74) Vertreter: Vomberg, Friedhelm
(86) Internationale Anmeldenummer: PCT/DE2001/000765
(87) Internationale Veröffentlichungsnummer: WO 2001/074520

(56) Entgegenhaltungen:
- DE-A- 3 500 602
- FR-A- 2 125 227
- US-A- 5 286 042

## Beschreibung

Die Erfindung betrifft ein Bohrwerkzeug mit einem Werkzeugträger, an dessen vorderer Stirnseite auswechselbare Schneideinsätze befestigt sind und der an seinem gegenüberliegenden Ende einen Schaftteil aufweist, und mit einer Verstelleinrichtung zur Minimierung des bohrsystembedingten Toleranzmaßes nach dem Oberbegriff des Anspruches 1.

Mit Schneideinsätzen ausgestattete Bohrwerkzeuge ohne Verstelleinrichtung, werden in der WO 98/07539, der EP 0 088 505 A1, EP 0 181 844 B1, DE 27 30 418 C2, EP 0 054 913 B1 und DE 27 51 255 C2 oder DE 44 16 040 A1 beschrieben.

Die verwendeten Wendeschneidplatten, Werkzeugträger mit Plattensitzen für die Wendeschneidplatten sowie auch die Bohrspindel können jedoch nur im Rahmen einer gewissen Toleranz maßgenau gefertigt werden. Abweichungen vom Sollmaß bei den genannten Teilen summieren sich, was im Ergebnis dazu führt, daß Durchmessertoleranzen beim Bohrer von +/- 0,15 mm eingehalten werden können. Bei Verwendung eines einschneidigen Bohrwerkzeuges verändert sich der Bohrungsdurchmesser während der Standzeit der Schneideinsätze durch Änderung der Verschleißmarkenbreite. Verschleißbedingt kommt es auch zu einer Vergrößerung der radialen Kraft, die häufig die Bohrwerkzeugstandzeit bzw. die Standzeit der verwendeten Schneideinsätze durch Über- oder Unterschreiten der zulässigen Durchmessertoleranz einschränkt. In der Praxis ist es somit nur in Einzelfällen möglich, das gesamte System des Bohrwerkzeuges mit dem Träger, der Wendeschneidplatte und der Spindel vor dem ersten Schnitt dauerhaft an die Toleranzgrenze zu legen, um die gesamte zulässige Durchmessertoleranz von 0,3 mm im Rahmen der Standzeit der Schneideinsätze verfügbar zu machen. Hinzu kommt, daß häufig kleinere Durchmessertoleranzen von +/- 0,1 mm oder weniger gefordert werden.

Um dieses Problem zu lösen, bietet sich die Verwendung einer radial verstellbaren Bohreraufnahme an, die über einen zusätzlichen Werkzeugadapter realisierbar ist, jedoch nachteiligerweise sehr kostenaufwendig ist.

Auf dem Markt wird derzeit ein Werkzeugträger mit einer Verstelleinrichtung angeboten, bei der in dem Werkzeugträger eine radial angeordnete, kegelförmige Bohrung eingebracht ist, in der ein radial verstellbarer Konus eingeschraubt ist, durch den in relativ engen Bereichen der Werkzeugträger punktuell einseitig "weggedrückt" wird, wodurch sich in engen Bereichen Toleranzabweichungen korrigieren lassen. Der bearbeitete Bohrdurchmesser kann je nach Einstellung größer als der Nenndurchmesser werden. Der Nachteil dieser Lösung besteht darin, daß die über den Kegel eingebrachte Kraft nur in einem engen Bereich des Trägers wirksam wird. Dies führt in der Praxis dazu, daß der Träger besonders bei sehr hohen Schnittgeschwindigkeiten zu Schwingungen neigt. Darüber hinaus ist durch den verwendeten Konus eine ungleiche Massenverteilung gegeben, die zu einer deutlichen Unwucht führt, welche sich insbesondere bei hohen Schnittgeschwindigkeiten von 500 m/min oder mehr erheblich auswirkt.

Die DE 35 00 602 A1 betrifft ein Bohrwerkzeug der eingangs genannten Art, bei dem die Mittellängsachse des Bohrerschaftes und die Mittellängsachse des Aufnahmeschaftes durch elastische Materialverformung des Bohrwerkzeuges in der Ebene der Schneidkanten winkelverstellbar und in der Winkellage zueinander einstellbar sind. Dies leisten zwei zwischen dem Bohrschaft und dem Aufnahmeschaft angeordnete, sich diametral gegenüberliegende Einschnitte (Schlitze), die in einer gemeinsamen Ebene, welche mit einer durch die Schneidkanten der Schneidflächen gelegten Ebene einen Winkel von 90° einschließt, senkrecht zur Mittellängsachse des Bohrwerkzeuges angeordnet sind. Im Bereich dieser Einschnitte ist eine die Wangen der Einschnitte gegeneinander abstützende Einstellvorrichtung und ggf. auf der gegenüberliegenden Seite eine verstellbare Stütze vorgesehen. Bei dieser Vorrichtung wird jedoch nachteiligerweise nur punktuell verstellt und verspannt, was das Risiko eines labilen Werkzeuges insbesondere bei hohen Schnittgeschwindigkeiten beinhaltet.

Es ist daher Aufgabe der vorliegenden Erfindung, die eingangs genannte Verstelleinrichtung zur Minimierung des bohrsystembedingten Toleranzmaßes zu verbessern.

Diese Aufgabe wird durch das Bohrwerkzeug nach Anspruch 1 gelöst.

Die erfindungsgemäße Lösung besteht darin, daß der Werkzeugträger jeweils an diametral gegenüberliegenden Seiten nutförmige Ausnehmungen aufweist, die in einer senkrecht zur Werkzeugträgerlängsachse liegenden Ebene exzentrisch angeordnet sind und die jeweils an der der Werkzeugträgerlängsachse zugekehrten Seite eine zylindermantelförmige Erweiterung besitzen, in der jeweils ein dem Zylindermaß entsprechend großer Bolzen angeordnet ist, von denen der erste Bolzen über eine radial zum Werkzeugträger angeordnete Doppelgewindeschraube mit einem Verstellkonus verbunden ist, der in einer konusförmigen mantelseitigen Ausnehmung des Werkzeugträgers anliegt. Durch Drehung der Doppelgewindeschraube ist der Abstand zu dem ersten Bolzen verstellbar, wobei je nach dem eingestellten Abstand das Maß bestimmt wird, in dem die auf dieser Seite liegende nutförmige Ausnehmung weiter aufgespreizt oder entspannt wird. Der zweite Bolzen ist mittels eines Gewindebolzens, der in eine durchgehende Gewindebohrung dieses Bolzens greift, gegenüber dem Werkzeugträger spannbar, wobei er die entsprechende Stauchung des Werkzeugträgers im Bereich auf der dieser Seite liegenden Nut kontert. Die vorgenannte Lösung hat gegenüber dem Stand der Technik mehrere Vorteile. Zunächst sind durch die diametral gegenüberliegenden nutförmigen Ausnehmungen zwei definierte Bereiche geschaffen worden, in denen der Werkzeugträger auf seiner einen Seite aufgespreizt und auf der anderen Seite gestaucht werden kann. Darüber hinaus wird im Stauchungsbereich der Nut durch den dortigen zweiten spannbaren Bolzen eine Gegenkraft gegen die über den Verstellkonus ausgeübte Kraft bewirkt, aufgrund der Werkzeugträgerschwingungen unterbunden werden. Ferner kann mittels des Verstellkonus, der über die Doppelgewindeschraube, auf der er aufgeschraubt ist, eine sehr feine Aufstellung und damit eine sehr feinfühlige Aufspreizung des betreffenden Bereiches der nutförmigen Ausnehmung auf dieser Seite erzielt werden. Gegenüber der nach dem Stand der Technik bekannten Version, in der ein Gewindekonus in eine vorgesehene Bohrung des Werkzeugträgers eingeschraubt war, die entsprechend dem Spreizungsmaß äußerst verschleißanfällig ist, wird bei der vorliegenden Erfindung die die Aufspreizung bewirkende Kraft durch Kontakt der Verstellkonus-Mantelfläche und der entsprechenden konusförmigen mantelseitigen Ausnehmung des Werkzeugträgers bewirkt. Durch die Verwendung der beiden Bolzen wird zudem eine maximale Steifigkeit des Werkzeugträgers erreicht. Ferner kann mit der vorliegenden Verstelleinrichtung, die aus den beiden Bolzen, der Doppelgewindeschraube, der Konusschraube und dem Gewindebolzen besteht, ein weitaus besserer Unwuchtausgleich erzielt werden, d.h., die etwa verbleibende Restunwucht ist gegenüber nach dem Stand der Technik bekannten Ausführungsformen minimal. Schließlich läßt sich mit der erfindungsgemäßen Verstelleinrichtung eine erheblich grö-ßere Endtoleranz des Werkzeugsystemes erreichen, die auf +/- 0,1 mm, vorzugsweise auf +/- 0,05 mm begrenzt wird.

Weiterbildungen der Erfindung sind in den Unteransprüchen beschrieben.

So liegen die vorgenannten Bolzen vorzugsweise parallel zueinander, d.h., die Bolzen liegen spiegelsymmetrisch zu einer durch das Werkzeugträgerzentrum gehenden Querachse. Diese Ausgestaltung erlaubt es auch, bei entsprechender Anordnung diametral gegenüberliegender konusförmiger Ausnehmungen wahlweise den Verstellkonus auf der einen oder auf der anderen Seite und auf der gegenüberliegenden Seite den spannbaren Konterbolzen vorzusehen. Ggf. können die beiden genannten Bolzen eine gleich große Geometrie (Durchmesser, Länge) aufweisen. Im Rahmen der vorliegenden Erfindung liegen auch solche Ausführungsformen vor, bei denen auf beiden diametral gegenüberliegenden Seiten ein Verstellkonus, eine Doppelgewindeschraube und ein Bolzen als jeweilige Verstelleinrichtung angeordnet sind. In diesem Fall ist zum Verstellen und Kontern auf beiden Seiten eine gleichartige Einstellmöglichkeit gegeben.

Nach einer weiteren Ausgestaltung der Erfindung liegen die Bolzen im Spannzustand flächig in den zylindermantelförmigen Erweiterungen an, zumindest jedoch entlang ihrer Längserstreckung linienförmig. Vorteilhafterweise wird somit ein Verkeilen oder Verklemmen der Bolzen vermieden.

Nach einer weiteren Ausgestaltung ist die Verstelleinrichtung im Bereich einer Werkzeugträgerverdickung angeordnet, die zum Schaftteil benachbart angeordnet ist. Durch diese Maßnahme wird ein größtmögliches Verschwenkungsmaß der Werkzeugträgerstirnfläche mit dortigen Schneideinsätzen erreicht.

Um die Aufspreizbarkeit bzw. Stauchung des Werkzeugträgers im Bereich der nutförmigen Ausnehmungen zu erleichtern, besitzen die Werkzeugträgerverdickungen seitliche Ausnehmungen (zwischen den nutförmigen Bereichen) oder anders ausgedrückt ist die Werkzeugträgerverdickung an den Seiten, an denen die Nuten vorliegen, allein oder verstärkt ausgeführt.

Bevorzugt liegt die jeweilige Breite der Nut zwischen 0,1 mm und 4 mm.

Der Durchmesser der nutförmigen Erweiterung und der darin angeordneten Bolzen ist nach einer weiteren Ausgestaltung der Erfindung mindestens doppelt so groß wie die Breite der nutförmigen Ausnehmungen, wobei vorzugsweise der Durchmesser des ersten Bolzens bzw. der diesbezüglichen nutförmigen Erweiterung um mindestens 20 % größer ist als der Durchmesser des zweiten Bolzens (zum Kontern) bzw. der diesbezüglichen nutförmigen Erweiterung.

Schließlich ist nach einer Weiterbildung der Erfindung die Tiefe jeder der nutförmigen Ausnehmungen so gewählt, daß der Abstand der die Bolzen aufnehmenden Erweiterungen mindestens so groß ist wie die Breite des Werkzeugträgers an seinem die Schneideinsätze tragenden Ende.

Ein Ausführungsbeispiel der Erfindung ist in den Zeichnungen dargestellt. Es zeigen
- Fig. 1 und 2: jeweils perspektivische schematische Ansichten eines Werkzeugträgers mit integrierter Verstelleinrichtung aus unterschiedlichen Blickwinkeln und

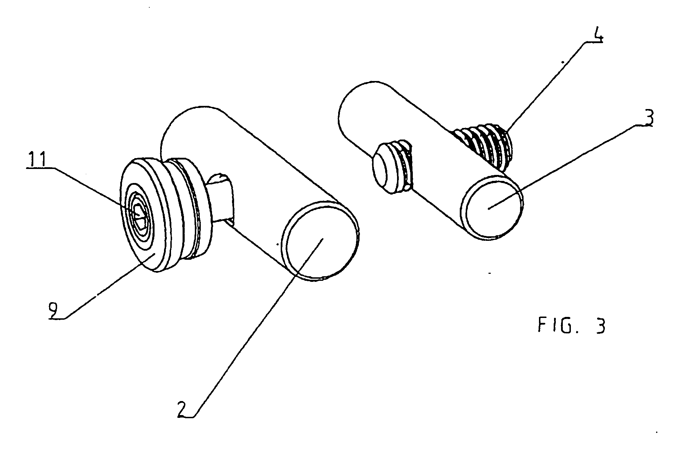

- Fig. 3: die jeweils (unter. Fortlassung des Werkzeugträgers) gemäß Fig. 1 benutzten Verstell- und Konter-Elemente.

Wie bereits eingangs erwähnt, sind Bohrwerkzeuge mit einem Werkzeugträger, der endseitig einen Schaft zum Einspannen des Werkzeugträgers in einer Spindel besitzt und an dem gegenüberliegenden Ende auswechselbare Schneideinsätze aufweist, grundsätzlich nach dem Stand der Technik bekannt, wobei im einzelnen beispielsweise auf die WO 98/07539 verwiesen werden kann.

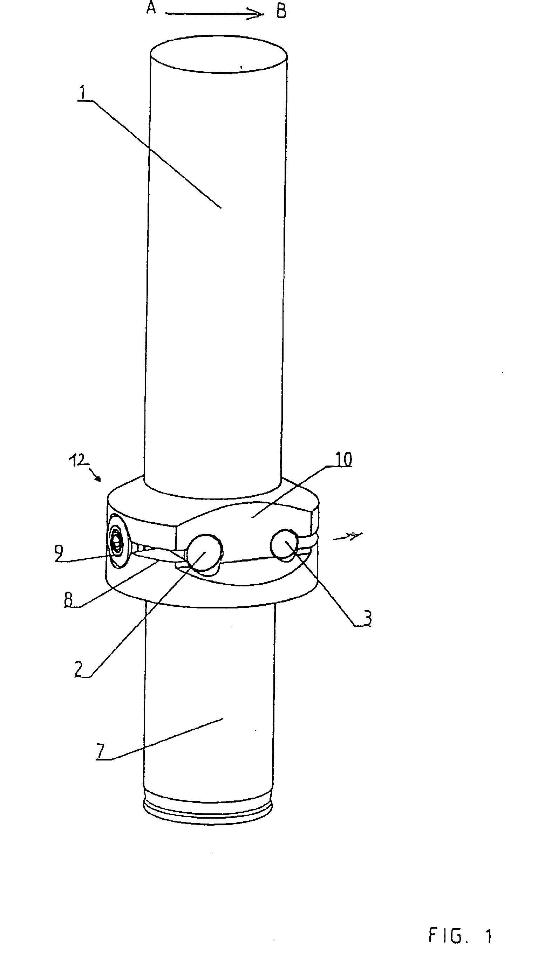

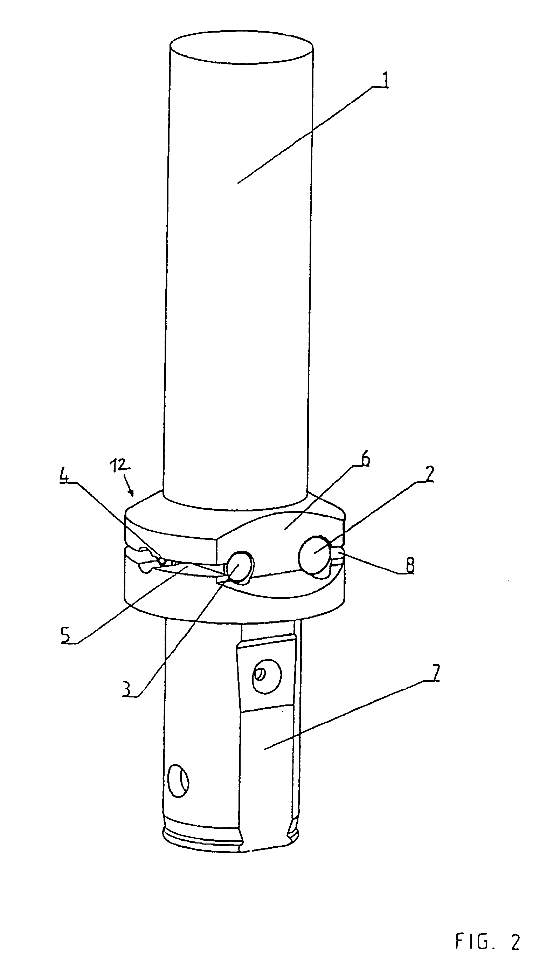

Fig. 1 und 2 zeigen in einer schematischen Ansicht einen Werkzeugträger 1 (ohne den endseitigen Bereich mit Plattensitzen, in denen Schneideinsätze eingespannt sind). Dieser Werkzeugträger besitzt einen Schaft 7 sowie benachbart hierzu eine sich über einen Teil der Längsachse erstreckende Träger-Verdickung 12, in der die Verstelleinrichtung zur Minimierung des bohrsystembedingten Toleranzmaßes angeordnet ist. Diese Verstelleinrichtung besteht aus zwei Bolzen 2, 3, die in entsprechend ausgebildeten zylinderförmigen Erweiterungen endseitig von nutförmigen Ausnehmungen 5, 8 angeordnet sind. Der durchmessergrößere Bolzen 2 besitzt eine querliegende Gewindebohrung, in der das eine Ende einer Doppelgewindeschraube 11 eingeschraubt ist. Auf das andere Ende der Doppelgewindeschraube 11 ist über ein entsprechendes Innengewinde ein Versellkonus 9 aufgeschraubt, dessen Außenmantel einen konusförmigen Bereich aufweist, der in einer entsprechend dem Konuswinkel angepaßten konusförmigen Ausnehmung des Werkzeugträgers 1 anliegt.

Auf der gegenüberliegenden Seite ist der Bolzen 3 angeordnet, der ebenfalls eine querliegende Gewindebohrung aufweist, in der ein Gewindebolzen 4 eingeschraubt ist. Die Werkzeugträgerverdickung besitzt an den in Fig. 1 und 2 dargestellten gegenüberliegenden Seiten seitliche Ausnehmungen 6 und 10.

Die Verstelleinrichtung wird in folgender Weise benutzt:

Das auf einen bestimmten Durchmesser eingestellte Werkzeug liegt bei vollkommen entspannter Verstelleinheit 2, 3, 4, 9, 11 vor. Der Gewindebolzen 4 und die Doppelgewindeschraube 11 sind hierbei gelöst. Um eine Verstellung von A nach B gemäß Fig. 1 zu erzielen, wird die Doppelgewindeschraube 11 in radialer Richtung auf das Werkzeugträgerzentrum eingeschraubt. Hierbei wird der Verstellkonus 9 radial nach innen bewegt, d.h., der Abstand des Verstellkonus 9 zu dem Bolzen 2, dessen Lage 2 im Werkzeugträger festgelegt ist, wird verringert. Infolge der über die betreffenden Konusflächen bewirkten Aufspreizung der nutförmigen Ausnehmung 8 und der gleichzeitigen Einschnürung der gegenüberliegenden Nut 5 kommt es zu einer Verbiegung des Werkzeugträgers, d.h. zu einer Verschwenkung des Werkzeugträgers an dessen stirnseitigem Ende von A nach B. Der Bolzen 2 wird gleichzeitig an die betreffende zylinderförmige Ausnehmung endseitig der Nut 8 angedrückt, wobei eine zumindest linienförmige Anlage bzw. eine flächige Anlage entlang seiner Längsachse erzielt wird, die eine zusätzliche Verspannung und Stabilisierung des Werkzeugträgers 1 bewirkt.

Um eine weitere Versteifung des Werkzeugträgers 1 zu erzielen, wird der Bolzen 3 nach erfolgter Durchmessereinstellung über die Doppelgewindeschraube 11 durch Drehung des Gewindebolzens 4 mit einer radial nach außen wirkenden Kraft beaufschlagt, wobei der Bolzen 3 zumindest linienförmig an den Werkträger bzw. die betreffende zylinderförmige Ausnehmung angedrückt wird. Dies wird bewirkt, indem die radial innen liegende Stirnseite des Gewindebolzens 4 sich an einer entsprechenden Fläche im Werkzeugträger abstützt. Der Bolzen 3, auf den eine senkrecht zu seiner Längsachse wirkende radial nach außen gerichtete Kraft ausgeübt wird, schafft ein Widerlager im Bereich des Nutendes 5, wodurch verhindert wird, daß der Werkzeugträger (unter Verringerung der Breite der Nut 5 und zurück) Schwingungen ausführen kann. Durch den Bolzen 2, die Doppelgewindeschraube 11 sowie den Verstellkonus 9 und die hiermit bewirkte Aufspreizung der Nut 8 einerseits und die Konterung durch den zugbelasteten Bolzen 3 ist eine maximale Steifigkeit des Werkzeugträgers erreicht. Durch die nahezu vollständige Ausfüllung aller zur Verstellbewegung notwendigen Lücken im Werkzeugträger 1 wird ein weitgehender Unwuchtausgleich geschaffen, d.h., die Restunwucht ist minimal. Ferner läßt sich über den Verstellkonus 9 eine optimale Verstellung bzw. Verbiegung des Werkzeugträgers erreichen, mit der das Toleranzband minimal gestaltet werden kann. Die Verstelleinrichtung läßt sich auch kostengünstig fertigen, da auf Standardbauteile, wie Bolzen 2, 3, die Doppelgewindeschraube 11, den Gewindebolzen 4 und einen Verstellkonus 9, zurückgegriffen werden kann. Prinzipiell besteht die Möglichkeit, den Werkzeugträger beidseitig zu verstellen, d.h., den Verstellkonus mit der Doppelgewindeschraube im Bereich der Nut 5 statt der Nut 8 und umgekehrt den Gewindebolzen auf der gegenüberliegenden Seite anzuordnen.

Durch die exakt arbeitende Verstelleinrichtung und die Konterung auf der gegenüberliegenden Seite zur Beseitigung unerwünschter Schwingungen kann das Bohrwerkzeug verschleißärmer betrieben und damit die Standzeit der verwendeten Schneideinsätze erhöht werden. Insgesamt ist das beschriebene Bohrwerkzeug somit nicht nur kostengünstig herstellbar, sondern auch einfach und hinsichtlich der Zielsetzung sicher handhabbar.

## Patentansprüche

1. Bohrwerkzeug mit einem Werkzeugträger (1), an dessen vorderer Stirnseite auswechselbare Schneideinsätze befestigt sind und der an seinem gegenüberliegenden Ende einen Schaftteil (7) aufweist, und mit einer Verstelleinrichtung zur Minimierung des bohrsystembedingten Toleranzmaßes, wobei der Werkzeugträger (1) jeweils an diametral gegenüberliegenden Seiten nutförmige Ausnehmungen (5, 8) aufweist, die in einer senkrecht zur Werkzeugträgerlängsachse liegenden Ebene exzentrisch angeordnet sind,
**dadurch gekennzeichnet,**
**daß** die nutförmigen Ausnehmungen jeweils an der der Werkzeugträgerlängsachse zugekehrten Seite eine zylindermantelförmige Erweiterung besitzen, in der jeweils ein dem Zylindermaß entsprechend großer Bolzen (2, 3) angeordnet ist, von denen der erste Bolzen (2) über eine radial zum Werkzeugträger (1) angeordnete Doppelgewindeschraube (11) mit einem Verstellkonus (9) verbunden ist, der in einer konusförmigen mantelseitigen Ausnehmung des Werkzeugträgers (1) anliegt, so daß durch Drehung der Doppelgewindeschraube (11) der Abstand zu dem ersten Bolzen (2) verstellbar ist, wobei je nach dem eingestellten Abstand das Maß bestimmt wird, in dem die auf dieser Seite liegende nutförmig Ausnehmung (8) weiter aufgespreizt oder entspannt wird, und daß der zweite Bolzen (3) mittels eines Gewindebolzens (4), der in eine durchgehende Gewindebohrung dieses Bolzens greift, gegenüber dem Werkzeugträger (1) spannbar ist, wobei er die entsprechende Stauchung des Werkzeugträgers (1) im Bereich der auf dieser Seite liegenden nutförmigen Ausnehmung (5) kontert.

2. Bohrwerkzeug nach Anspruch 1, **dadurch gekennzeichnet, daß** die Bolzen (2, 3) parallel zueinander angeordnet sind.

3. Bohrwerkzeug nach Anspruch 1 oder 2, **dadurch gekennzeichnet, daß** die Bolzen (2, 3) im Spannzustand flächig, zumindest aber linienförmig in den zylindermantelförmigen Erweiterungen anliegen.

4. Bohrwerkzeug nach einem der Ansprüche 1 bis 3, **dadurch gekennzeichnet, daß** der Werkzeugträger die Verstelleinrichtung (2, 3, 4, 5, 8, 9, 11) im Bereich einer Werkzeugträgerverdickung (12) aufweist, die zum Schaftteil (7) benachbart angeordnet ist.

5. Bohrwerkzeug nach Anspruch 4, **dadurch gekennzeichnet, daß** die Werkzeugträgerverdickung (12) an den um 90° zu den nutförmigen Ausnehmungen (5, 8) versetzten Seiten in der Höhe der nutförmigen Ausnehmungen (5, 8) die Trägerverdickung (12) verringernde und damit schwächende Ausnehmungen (6, 10) aufweist.

6. Bohrwerkzeug nach einem der Ansprüche 1 bis 5, **dadurch gekennzeichnet, daß** die Breite der nutförmigen Ausnehmungen (5, 8) zwischen 0,1 mm und 4 mm liegt.

7. Bohrwerkzeug nach einem der Ansprüche 1 bis 6, **dadurch gekennzeichnet, daß** der Durchmesser der nutförmigen Erweiterung und der darin angeordneten Bolzen (2, 3) mindestens doppelt so groß ist wie die Breite der nutförmigen Ausnehmungen (5, 8), wobei vorzugsweise der Durchmesser des ersten Bolzens (2) bzw. der diesbezüglichen nutförmigen Erweiterung um mindestens 20 % größer ist als der Durchmesser des zweiten Bolzens (3) bzw. der diesbezüglichen nutförmigen Erweiterung.

8. Bohrwerkzeug nach einem der Ansprüche 1 bis 7, **dadurch gekennzeichnet, daß** der Abstand der die Bolzen (2, 3) aufnehmenden Erweiterungen mindestens so groß ist wie die Breite des Werkzeugträgers (1) an seinem die Schneideinsätze tragenden Ende.

## Claims

1. Drilling tool with a tool holder (1) on whose front face (7) interchangeable cutting inserts are mounted which has a shaft part on the opposite end, and with an adjustment device for minimizing drilling-system misalignment, the tool holder (1) having diametrally oppositely groove-shaped recesses (5, 8) that lie excentrically perpendicular to a longitudinal tool-holder axis
**characterized in that**
each have a cylindrical-like shell extension on each of the sides facing the longitudinal axis of the holder wherein each a bolt (2, 3) is located, whose dimensions correspond to the size of the cylindrical shell extension, extending radially of the holder (1) with a spreading cone (9) that is seated in a conically shaped outer recess of the tool holder (1) so that rotation of the double-threaded screw (11) changes the spacing to the one bolt (2), the spacing to the one bolt (2) determining the degree to which the groove-shaped recess located on this side is further expanded or slackened, and that the second bolt (3) can be tightened in relation to the tool holder (1) via a threaded screw (4) passing completely through a threaded hole of this bolt so that counteracts the corresponding strain of the tool holder (1) in the region of the groove-shaped recess (5) on this side.

2. Drilling tool according to claim 1 **characterized in that** the bolts (2, 3) extend parallel to each other.

3. Drilling tool according to claim 1 or 2 **characterized in that** the bolts (2, 3) engage flatly at least in line contact with the respective cylindrical-like shell extensions.

4. Drilling tool according to one of the claims 1 to 3 **characterized in that** the tool holder has the adjustment device (2, 3, 4, 5, 8, 9, 11) in a tool holder thickened region (12) which is neighbored to the shaft part (7).

5. Drilling tool according to claim 4 **characterized in that** the tool holder thickened region (12) has offset by 90° to the groove-shaped recesses (5, 8) on opposite sides and level with the groove-like recesses (5, 8) cutouts (6, 10) reducing the thickness of and weakening the thickened region (12).

6. Drilling tool according to one of the claims 1 to 5, **characterized in that** the width of the groove-like recesses (5, 8) is between 0,1 mm and 4 mm.

7. Drilling tool according to one of the claims 1 to 6, **characterized in that** the diameter of the groove-like recesses and of the bolts (2, 3) located therein is at least twice as great as the width of the groove-like recesses (5, 8) whereby preferably the diameter of the first bolt (2) and its groove-like recess being at least 20 % larger than the diameter of the second bolt (3) and its groove like recess.

8. Drilling tool according to one of the claims 1 to 7, **characterized in that** the spacing between the groove-like recesses holding the bolts (2, 3) is at least as great as the width of the tool holder (1) at its insert-carrying end.

## Revendications

1. Outil de perçage avec un porte-outil (1) sur la face frontale avant duquel sont fixés des inserts de coupe échangeables et qui présente une partie tige (7) à son extrémité opposée, et avec un dispositif de réglage destiné à minimiser la mesure de tolérance due au système de perçage, ledit porte-outil (1) présentant - respectivement sur des côtés diamétralement opposés - des évidements (5, 8) en forme de rainure qui sont disposés excentriquement dans un plan situé perpendiculairement à l'axe longitudinal du porte-outil,
**caractérisé par le fait**
**que** lesdits évidements en forme de rainure présentent, respectivement sur le côté montrant vers l'axe longitudinal du porte-outil, une extension en forme de cylindre dans laquelle est disposé respectivement un boulon (2, 3) dont la dimension correspond à la mesure du cylindre et dont le premier boulon (2) est relié par le biais d'une vis à double filet (11) disposées radialement par rapport au porte-outil (1) à un cône de réglage (9) qui prend appui dans un évidement conique réalisé dans la nappe du porte-outil (1), de sorte que la distance par rapport au premier boulon (2) peut être réglée en tournant ladite vis à double filet (11), au fur et à mesure de la distance réglée étant déterminée la mesure dans laquelle l'évidement (8) en forme de rainure qui est situé sur ce côté est écarté encore plus fortement ou est détendu, et que le second boulon (3) peut être serré par rapport au porte-outil (1) au moyen d'un boulon fileté (4) qui s'engage dans un trou taraudé traversant de ce boulon, ledit second boulon agissant contre l'écrasement correspondant du porte-outil (1) dans la zone de l'évidement (5) en forme de rainure situé sur ce côté.

2. Outil de perçage selon la revendication 1, **caractérisé par le fait que** lesdits boulons (2, 3) sont disposés parallèlement l'un à l'autre.

3. Outil de perçage selon la revendication 1 ou 2, **caractérisé par le fait que**, en état serré, les boulons (2, 3) s'appliquent sur toute la surface, mais au moins linéairement dans lesdites extensions en forme de cylindre.

4. Outil de perçage selon l'une des revendications 1 à 3, **caractérisé par le fait que** le porte-outil présente le dispositif de réglage (2, 3, 4, 5, 8, 9, 11) dans une zone épaissie (12) du porte-outil qui est voisine de ladite partie tige (7).

5. Outil de perçage selon la revendication 4, **caractérisé par le fait que**, sur les côtés décalés de 90° par rapport aux évidements (5, 8) en forme de rainure et au niveau des évidements (5, 8) en forme de rainure, ladite zone épaissie (12) du porte-outil présente des évidements (6, 10) qui réduisent et, par conséquent, affaiblissent ladite zone épaissie (12) du porte-outil.

6. Outil de perçage selon l'une des revendications 1 à 5, **caractérisé par le fait que** la largeur des évidements (5, 8) en forme de rainure est comprise entre 0,1 mm et 4 mm.

7. Outil de perçage selon l'une des revendications 1 à 6, **caractérisé par le fait que** le diamètre de l'extension en forme de cylindre et des boulons (2, 3) disposés dans celle-ci est au moins deux fois plus grand que la largeur des évidements (5, 8) en forme de rainure, de préférence le diamètre du premier boulon (2) ou bien de l'extension associée en forme de cylindre étant d'au moins 20 % plus grand que le diamètre du second boulon (3) ou bien de l'extension associée en forme de cylindre.

8. Outil de perçage selon l'une des revendications 1 à 7, **caractérisé par le fait que** la distance entre les extensions recevant lesdits boulons (2, 3) est au moins aussi grande que la largeur du porte-outil (1) à son extrémité qui porte les inserts de coupe.
